# NEW EUROPEAN PATENT SPECIFICATION

(11) **EP 2 155 488 B2**
(45) Date of publication and mention of the opposition decision: **01.08.2018**
(45) Mention of the grant of the patent: 26.01.2011
(21) Application number: 08737168.8
(22) Date of filing: 02.05.2008
(51) Int. Cl.: B32B 27/08, B65D 35/08

(54) **COLLAPSIBLE TUBE CONTAINERS**
ZUSAMMENDRÜCKBARE TUBENBEHÄLTER
RÉCEPTACLES POUR TUBES SOUPLES

(30) Priority: 02.05.2007 GB 0708493
(43) Date of publication of application: 24.02.2010
(73) Proprietor: Boddington IP Limited, London W1G OPW (GB)
(72) Inventor: ASHMAN, Philip, Colin, Essex CO4 9HE (GB)
(74) Representative: Boult Wade Tennant
(86) International application number: PCT/GB2008/001556
(87) International publication number: WO 2008/135755

(56) References cited:
- EP-A2- 0 321 172
- WO-A-00/58076
- WO-A-01/87596
- WO-A-98/42506
- WO-A-2008/065280
- WO-A1-2006/084580
- US-A1- 2003 027 008

## Description

The present invention relates to collapsible tube containers formed from blown film multi-layer polymeric materials, and in particular collapsible tube containers comprising a side-seam weld or join. Preferably, the blown film multi-layer polymeric materials are thermoplastics materials, and the blown multi-layer polymeric materials may include a layer of material having good barrier properties.

Thermoplastics materials are widely used in packaging because of their low cost and ease of forming into a variety of shapes. However, most thermoplastics materials suffer from the disadvantage of providing only a relatively poor barrier to gases and vapours. Packaging having poor gas barrier properties is particularly disadvantageous for packaging oxygen-sensitive materials, such as foodstuffs, which are to be stored in a non-refrigerated condition. It is also disadvantageous for packaging to have poor vapour barrier properties when packaging items which are sensitive to moisture vapour, for example foodstuffs and confectionery which deteriorate when they become damp, and when packaging items which include flavouring components which diffuse through the packaging material with a consequent loss of flavour.

Thermoplastic containers which are used for the storage and delivery of flavoured materials, e.g. toothpaste, are required to store the materials for prolonged periods of time, e.g. up to three years, without substantial loss of flavouring.

The problems of gas and vapour transmission, deterioration and loss of flavouring have been ameliorated by the use of laminates or composites containing barrier layers. A known thermoplastics material with good barrier properties is ethylene vinyl alcohol (EVOH) which is typically used as a thin layer sandwiched between layers of other thermoplastics materials, typically polyolefinic materials. Other known materials with good barrier properties to vapour transmission are polyamides, amorphous polyamides (APA), polyacrylonitrile and aliphatic polyketones, and aluminium foil.

As an alternative to EVOH or other such barrier layers, plate-like fillers such as talc, mica and the like have been incorporated into thermoplastics materials and used to improve the barrier properties of laminates or composites.

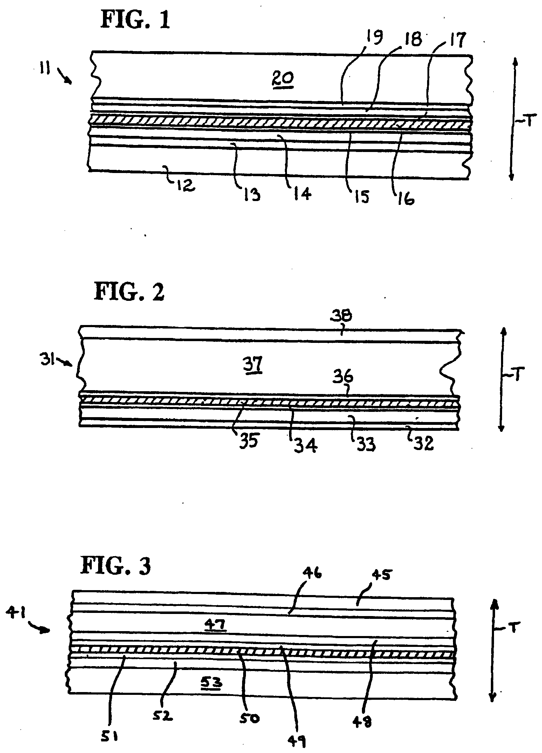

A typical prior art laminate having a centrally positioned barrier layer is shown in Figure 1 and will be described in detail later. Laminates having a barrier layer arranged asymmetrically within the different layers of the material are also known.

Whilst all of these known laminate or composite structures have effective barrier layer properties, the applicant has found that these and other known laminate and composite structures (with or without barrier layers) suffer from the problem of distortion (ovality) when subsequently processed to make collapsible tube containers, e.g. toothpaste tubes. Distortion or ovality of collapsible tube containers is a problem both in terms of handling (stacking and storing of empty tube containers, e.g. jamming, etc.) and subsequent filling operations (inefficient/slower filling times, e.g. voids, blockages, etc.). This distortion or ovality problem results from individual layers of known laminate or composite structures warping and/or curving on being processed, giving rise to asymmetric structures, and is as a result of individual layers or sub-assemblies of layers in the laminate or composite structure each exhibiting individual stress patterns different to those in adjacent layers, i.e. a different molecular orientation profile exists in each layer resulting in "unbalanced molecular orientation" of respective layers or sub-assemblies of layers.

In addition, the applicant has found that certain more aggressive ingredients (such as surfactants) to be packaged cause known laminate and composite structures (with or without barrier layers) to exhibit weakness in terms of stress cracking and/or delamination of layers.

A major contributing factor to all of the above problems is that each layer or sub-assembly of layers used to form the laminate or composite structure is formed from layers of discrete polymer materials having different molecular orientation profiles, each exhibiting individual stress patterns different to those in adjacent layers. These individualised molecular orientation profiles and stress patterns occur as a result of the inherent rapid heating and cooling processes experienced during the manufacture of each layer or sub-assembly of layers. Further, it is usual for the different layers or sub-assembly of layers to be manufactured using different processes, using similar processes at different times (often with different batches or sources of raw material) or using different production lines (even at different geographical locations). As a result, the individualised molecular orientation profiles and stress patterns of each layer or sub-assembly of layers are not matched or balanced throughout the resulting laminate or composite structure. When the resulting laminate or composite structure is subsequently processed to make collapsible tube containers, certain of these unmatched or unbalanced individualised molecular orientation profiles and/or stresses particular to each layer are relieved, giving rise to competing forces which casues distortion or ovality in the laminate or composite structure and can detrimentally affect the forming of the tube.

The present invention addresses this problem by taking advantage of existing alternative manufacturing techniques, namely blown film technology, to produce multi-layer polymeric materials whose layers do not exhibit conflicting molecular orientation profiles and/or stress patterns. Instead, each layer or sub-assembly of layers has a similar molecular orientation profile resulting in "balanced molecular orientation" throughout the respective layers or sub-assemblies of layers. The molecular orientation profile of each layer is not necessarily ordered in any particular or specified manner, it is simply that each layer or sub-assembly of layers exhibits the same molecular orientation profile (i.e. the orientation profile is replicated throughout each layer of the structure). As a result, the respective layers do not exhibit competing forces or stresses. In addition, these blown film multi-layer polymeric materials can have at least comparable barrier properties as the known laminate or composite structures described above. The resulting blown film multi-layer polymeric material can be formed into a tube incorporating a side-seam weld or join using conventional laminate tube making technologies. The blown film multi-layer polymeric material requires no subsequent lamination step before it is formed into a tube incorporating a side-seam weld or join. In addition, the applicant has found that collapsible tube containers according to the present invention exhibit greatly improved resistance to the more aggressive ingredients (such as surfactants) to be packaged, not suffering weakness in terms of stress cracking and/or delamination of layers even when tested over extended periods of time at elevated levels of aggressive attack. This enables more aggressive ingredients to be packaged using collapsible tube containers according to the present invention.

According to a first aspect of the present invention, there is provided a collapsible tube container according to claim 1.

Advantageously, the multi-layer polymeric material comprises at least one barrier layer.

Preferably, the polymeric material comprises between one and twenty layers, more preferably between one and ten layers. Advantageously, the multi-layer polymeric material comprises eight or nine layers.

Preferably, the multi-layer polymeric material comprises a layer of LMPDE, a layer of HDPE, a tie layer, a barrier layer, a further tie layer, a further layer of HDPE and a further layer of LMDPE.

Alternatively, the multi-layer polymeric material comprises a layer of MDPE, a layer of HDPE, a further layer of HDPE, a layer of LDPE, a tie layer, a barrier layer, a further tie layer, a further layer of HDPE and a further layer of MDPE.

Advantageously, the polymeric material or multi-layer polymeric material comprises a thickness of substantially 250 microns.

Alternatively, the multi-layer polymeric material comprises a layer of MDPE of substantially 30 microns, a layer of HDPE of substantially 20 microns, a further layer of HDPE of substantially 55 microns, a layer of LDPE of substantially 20 microns, a tie layer of substantially 12.5 microns, a barrier layer of substantially 15 microns, a further tie layer of substantially 12.5 microns, a further layer of HDPE of substantially 25 microns and a further layer of MDPE of substantially 60 microns.

Preferably, the at least one barrier layer comprises ethylene vinyl alcohol (EVOH).

Alternatively, the at least one barrier layer comprises amorphous polyamide (APA).

Alternatively, the at least one barrier layer comprises Barex.

Alternatively, the at least one barrier layer comprises a thermoplastics resin or material filled with platelet filler. Preferably, the platelet filler comprises any one or more of clays, mica, graphite, montmorillonite or talc. More preferably, the platelet filler comprises a high purity talc.

Preferably, the multi-layer polymeric material comprises at least one barrier layer.

According to another aspect of the present invention, there is provided use of a multi-layer polymeric material according to claim 6.

According to another aspect of the present invention, there is provided a method of forming a collapsible tube container according to claim 7.

Preferably, the cross-section of at least part of the elongated container shape is substantially round or oval.

Alternatively, the cross-section of at least part the elongated container shape is substantially polyhedral. Preferably, the cross-section of at least part of the elongated container shape is substantially square with edges formed by creasing.

Preferably, the blown film multi-layer polymeric material comprises at least one barrier layer.

According to another aspect of the present invention, there is provided use of a collapsible tube container for packaging personal care products or foodstuffs.

Preferably, the collapsible tube container is used for packaging toothpaste or toothpaste type products.

According to another aspect of the present invention, there is provided a collapsible tube container according to claim 10.

According to another aspect of the present invention, there is provided a collapsible tube container according to claim 12. Further aspects of the present invention one as set out in the appended claims.

Preferred embodiments of the present invention will now be described, by way of example only, with reference to the accompanying drawings, in which:
Figure 1 is a schematic representation of a prior art laminate structure;
Figure 2 is a schematic representation of a first blown film multi-layer polymeric material according to the present invention; and
Figure 3 is a schematic representative of a second blown film multi-layer polymeric material according to the present invention.

A first known laminate 11, illustrated in Figure 1, has an overall thickness T of about 300 microns and comprises a plurality of layers 12-20, the inner layer being identified layer 12 and the external layer being layer 20. The laminate 11 is formed by extrusion lamination or adhesive lamination. The inner layer 12 comprises linear medium density polyethylene (LMDPE) having a thickness of about 75 microns, and the adjacent outer layer 13 comprises low density polyethylene (LDPE) having a thickness of about 20 microns. Externally of the layer 13 is a layer 14 of linear low density polyethylene (LLDPE) having a thickness of about 20 microns which is adhered to an ethylene vinyl alcohol (EVOH) barrier layer 16 (shaded for ease of identification) by a tie layer 15. The tie layer 15 typically comprises a maleic anhydride functionalised polyethylene of about 5 microns thickness and the barrier layer 18 has a thickness of about 15 to 25 microns. Externally of the barrier layer 16 are a tie layer 17, a LLDPE layer 18 and a LDPE layer 19 which are substantially identical to the layers 15, 14 and 13, respectively. The external layer 20 is a layer of medium density polyethylene (MDPE) having a thickness of about 110 microns.

As a result of the manufacturing process used to form the laminate structure referred to above (extrusion lamination), individual stress patterns (caused by molecular orientation) are set up in each layer which are different to those in adjacent layers. These individual stress patterns occur as a result of the inherent rapid heating and cooling processes during the manufacture and forming of each layer of the laminate structure. The applicant has found that when the laminate structure is subsequently processed to make collapsible tube containers, certain of these conflicting individualised stresses are relieved, causing distortion which detrimentally affects the forming of the tube. The resulting tubes can suffer from ovality and other distortions, which can ultimately compromise the structural integrity of the tube. Ovality problems in turn impact upon automated packing, handling and filling processes, limiting the speed at which the filling step can be carried out and reducing the overall efficiency of the tube forming and filling process. In addition, certain more aggressive ingredients (such as surfactants) to be contained cause these known laminate and composite structures (with or without barrier layers) to exhibit weakness in terms of stress cracking and/or delamination of layers.

With reference now to Figure 2, there is shown a seven-layer polymeric material 31 according to a first embodiment of the present invention which is formed using blown film technology. The seven-layer polymeric material 31 is formed by co-extruding seven polymer material compositions as hot melts through a die, and drawing and stretching the extruded melts by blowing cooling air currents thereon. The hot melt compositions are co-extruded in the form of a tube, which is drawn by the cooling air flow, and nipped at a desired length to form a cylindrical bubble. As the blown film bubble forms, the polymer layers cool until they achieve sufficient melt strength to stabilise the bubble and prevent its further expansion. The point at which the blown film bubble has cooled sufficiently to change state from an unstable state, where the bubble may be expanded, to a state where the bubble stabilises is referred to as the frost line. Once the blown film bubble has cooled, it is then collapsed at a desired point by nip rollers, and the seven-layer polymeric material 31 is wound onto a reel, spool or the like. This results in a blown film seven-layer polymeric material 31 having a uniform thickness.

Blown film technology and manufacturing equipment is well known in the art. Brampton Engineering of Ontario, Canada (www.be-ca.com), for example, manufacture blown film systems suitable for use in the manufacture of blown film multi-layer polymeric material used in the present invention.

The seven-layer polymeric material 31 has an overall thickness T of about 250 microns and, from inside to outside, comprises layers 32-38. The inner layer 32 (which contacts the packaged product) is a layer of LMPDE about 25 to 35 microns thick. The adjacent outer layer 33 is HDPE with a thickness of from 15 to 50 microns which is adhered to a barrier layer 35 by a tie layer 34. The barrier layer 35 is an EVOH layer or an amorphous polyamide layer. The barrier layer 35 is about 10 to 15 microns thick and the tie layer 34 has a thickness of about 5 to 10 microns. Externally of the barrier layer 35 is a second tie layer 36 of about 5 to 10 microns, an outer HDPE layer 37 having a thickness of from about 50 to 190 microns, and an external LMPDE layer 38 having a thickness of about 25 to 35 microns. The external layer 38 is the outer surface and may be printed on.

All of the stresses present in each of the layers making up the blown film seven-layer polymeric material are aligned or balanced as a result of the uniform polymer chain/molecular orientation of each layer. Each layer or sub-assembly of layers has a similar molecular orientation profile resulting in "balanced molecular orientation" throughout the respective layers or sub-assemblies of layers. The molecular orientation profile of each layer is not necessarily ordered or orientated in any particular or specified manner, it is simply that each layer or sub-assembly of layers exhibits the same molecular orientation profile (i.e. the orientation profile is replicated throughout each layer of the structure). As a result, the respective layers do not exhibit competing stress patterns which give rise to any significant distortion or ovality problems.

A strip or strips of the seven-layer polymeric material 31 are then used to form collapsible tube containers. The strip or strips are rolled into a round or oval shape, with overlapping or abutting edges of the strip being welded or joined together to form a substantially round/oval cross-section flexible tube. As a result of the uniform polymer/molecular chain orientation of each layer, detrimental distortion or ovality effects are avoided.

With reference now to Figure 3, there is shown a nine-layer polymeric material 41 according to second embodiment of the present invention which is again formed using blown film technology. The nine-layer polymeric material 41 has an overall thickness T of about 250 microns. It is formed by co-extruding nine polymer material compositions as hot melts through a die, while drawing and stretching the extruded melts by blowing cooling air currents thereon, as with the first embodiment described above. The nine-layer polymeric material 41 comprises an inner layer 53 (which contacts the packaged product) of LLDPE of about 60 microns, a layer 52 of HDPE of about 25 microns, a tie layer 51 of about 12.5 microns, a barrier layer 50 of EVOH of about 15 microns, a further tie layer 49 of about 12.5 microns, a layer 48 of LDPE of about 20 microns, a layer 47 of HDPE of about 55 microns, a layer 46 of HDPE of about 20 microns, and an outer layer 45 of LLDPE of about 30 microns. The outer layer 45 is the outer surface and may be printed on. Adjacent layers of similar material could alternatively be provided as one thicker layer (e.g. the two adjacent HDPE layers 47 and 46 described above could be provided as just one layer of HDPE).

Again, collapsible tube containers are then formed from a strip or strips of the nine-layer polymeric material 31. The strip or strips are rolled into a round or oval shape with overlapping or abutting edges of the strip or strips being welded or joined together to form a substantially round/oval cross-section flexible tube. As a result of the uniform polymer/molecular chain orientation of each layer, detrimental distortion or ovality effects are avoided.

A preferred HDPE has a density of at least 0.95g.cm2 and a melt flow index of from 4 to 10 g/10 min preferably 7 to 8 g/10 min, (2160 g load at 190°C) measured to ISO/IEC 1133.

A preferred LLDPE has a density of 0.92g.cm2 and a melt flow index of 1.0 (2160 g load at 190°C) measured to ASTM D1238.

A further preferred HDPE has a density of 0.96g.cm2 and a melt flow index of 1.2 (2160 g load at 190°C) measured to ASTM D1238.

A yet further preferred HDPE has a density of 0.96g.cm2 and a melt flow index of 0.95 (2160 g load at 190°C) measured to ASTM D1238.

A preferred LDPE has a density of 0.93g.cm2 and a melt flow index of 0.9 (2160 g load at 190°C) measured to ASTM D1238.

*A preferred* tie *layer has* a *density of 0.91* g.cm2 *and a* melt flow index of 1.7 (2160 g load at 190°C) *measured* to ASTM D1238.

A preferred EVOH has a density of 1.17g.cm2 and a melt flow index of 1.7 (2160 g load at 190°C) measured to ASTM D1238.

A yet further preferred HDPE has a density of 0.95g.cm2 and a melt flow index of 0.95 (2160 g load at 190°C) measured to ASTM D1238.

A further preferred LLDPE has a density of 0.94g.cm2 and a melt flow index of 2.5 (2160 g load at 190°C) measured to ASTM D1238.

Collapsible tube containers according to the present invention were tested against prior art tubes used as controls to evaluate stress crack resistance and roundness.

The test for stress crack resistance was based on the following test procedure:
i) crimp each tube end (using the manual crimping apparatus 1484).
ii) condition the tubes at 22°C to 24°C and 46% to 54% humidity for at least 4 hours before testing.
iii) if required, fill each tube with Synperonic N. Swish the liquid around so that the entire surface on inside of the tube is coated.
iv) coat the outer surface of the tube with Synperonic N.
v) place the tubes in a sealed plastic bag. Place the bag in an oven at 60°C for 15 days.
vi) examine external surface every 3 days for any sign of stress damage. No failure is permitted.
vii) if required, cut open the tube at the end of the 15 days and examine the inside surfaces.

Two sets of forty collapsible tube containers according to the present invention (set GF1 and set GF1/1) and two sets of forty prior art control tubes (set 300/15 and set 300/25) were tested. The results were as follows:

| **Dimension: Stress crack (number of cracked tubes out of 40)** | | | | |
|---|---|---|---|---|
| | **GF1** | **GF1/1** | **300/15** | **300/25** |
| **3 days** | 0 | 0 | 40 | 40 |
| **6 days** | 0 | 0 | 40 | 40 |
| **9 days** | 0 | 0 | 40 | 40 |
| **12 days** | 0 | 0 | 40 | 40 |
| **15 days** | 0 | 0 | 40 | 40 |

It will be appreciated from these results that the collapsible tubes according to the present invention showed no stress cracking at all, as compared to cracking experienced in all of the prior art control tubes.

The test for roundness was a measure of roundness using a Smartscope to ASME Y14.5 (American Society of Mechanical Engineers standard).

A set of one hundred collapsible tube containers according to the present invention (set GF1/1) and two sets of one hundred prior art control tubes (set PBL Laminate 1 and set PBL Laminate 2) were tested. The results were as follows:

| **Roundness** | | **Measured using Smartscope** | | |
|---|---|---|---|---|
| | | **GF1/1** | **PBL Laminate 1** | **PBL Laminate 2** |
| **sample** | | **roundness** | **roundness** | **roundness** |
| 1 | | 1.43 | 2.21 | 1.51 |
| 2 | | 1.21 | 1.94 | 2.05 |
| 3 | | 1.27 | 2.42 | 1.31 |
| 4 | | 1.29 | 2.26 | 1.15 |
| 5 | | 1.38 | 2.83 | 1.48 |
| 6 | | 0.97 | 3.04 | 1.47 |
| 7 | | 1.27 | 1.80 | 1.60 |
| 8 | | 0.89 | 2.49 | 1.22 |
| 9 | | 1.08 | 2.56 | 1.70 |
| 10 | | 1.23 | 2.24 | 1.53 |
| 11 | | 1.43 | 3.03 | 1.48 |
| 12 | | 1.51 | 3.16 | 1.53 |
| 13 | | 1.15 | 2.42 | 1.39 |
| 14 | | 1.50 | 2.51 | 1.05 |
| 15 | | 1.40 | 2.50 | 2.23 |
| 16 | | 1.96 | 2.83 | 1.89 |
| 17 | | 1.12 | 2.09 | 1.85 |
| 18 | | 1.44 | 2.82 | 1.22 |
| 19 | | 1.36 | 2.20 | 1.61 |
| 20 | | 1.57 | 2.35 | 0.97 |
| 21 | | 1.18 | 1.65 | 1.15 |
| 22 | | 1.86 | 2.83 | 1.02 |
| 23 | | 1.70 | 2.25 | 1.26 |
| 24 | | 1.34 | 2.40 | 2.61 |
| 25 | | 1.58 | 2.38 | 2.01 |
| 26 | | 1.41 | 2.28 | 1.76 |
| 27 | | 1.92 | 2.38 | 1.25 |
| 28 | | 1.65 | 1.69 | 1.38 |
| 29 | | 1.54 | 2.53 | 1.43 |
| 30 | | 1.47 | 2.58 | 0.95 |
| 31 | | 1.56 | 2.08 | 1.40 |
| 32 | | 1.38 | 2.15 | 1.44 |
| 33 | | 1.35 | 2.38 | 1.53 |
| 34 | | 1.11 | 2.19 | 0.96 |
| 35 | | 1.09 | 2.59 | 1.67 |
| 36 | | 1.85 | 1.86 | 1.66 |
| 37 | | 1.53 | 2.22 | 1.77 |
| 38 | | 1.42 | 2.46 | 1.31 |
| 39 | | 1.38 | 2.59 | 1.76 |
| 40 | | 1.02 | 2.37 | 2.08 |
| 41 | | 1.00 | 2.01 | 1.34 |
| 42 | | 1.27 | 2.07 | 2.02 |
| 43 | | 1.35 | 2.62 | 1.74 |
| 44 | | 0.82 | 1.83 | 1.91 |
| 45 | | 1.04 | 2.30 | 1.42 |
| 46 | | 1.26 | 2.31 | 1.73 |
| 47 | | 1.22 | 2.10 | 2.50 |
| 48 | | 1.10 | 2.26 | 1.94 |
| 49 | | 1.52 | 2.13 | 1.49 |
| 50 | | 1.51 | 2.94 | 1.50 |
| 51 | | 1.65 | 1.35 | 1.61 |
| 52 | | 1.06 | 2.41 | 1.08 |
| 53 | | 1.00 | 2.50 | 2.11 |
| 54 | | 1.16 | 2.26 | 1.07 |
| 55 | | 1.01 | 3.31 | 1.70 |
| 56 | | 1.13 | 2.39 | 3.19 |
| 57 | | 1.36 | 2.42 | 1.54 |
| 58 | | 1.01 | 2.41 | 1.23 |
| 59 | | 1.37 | 2.20 | 1.46 |
| 60 | | 1.23 | 2.23 | 1.00 |
| 61 | | 1.73 | 2.73 | 0.86 |
| 62 | | 1.76 | 2.18 | 1.65 |
| 63 | | 1.30 | 2.73 | 1.54 |
| 64 | | 1.27 | 2.34 | 1.21 |
| 65 | | 1.64 | 2.06 | 2.06 |
| 66 | | 1.74 | 2.12 | 1.70 |
| 67 | | 1.22 | 2.12 | 1.70 |
| 68 | | 1.34 | 1.79 | 2.47 |
| 69 | | 1.10 | 2.94 | 1.31 |
| 70 | | 1.04 | 2.17 | 1.97 |
| 71 | | 1.38 | 2.51 | 1.00 |
| 72 | | 1.93 | 2.38 | 1.44 |
| 73 | | 1.17 | 2.78 | 1.82 |
| 74 | | 1.53 | 2.31 | 1.57 |
| 75 | | 1.45 | 2.42 | 1.78 |
| 76 | | 1.06 | 2.03 | 1.28 |
| 77 | | 1.03 | 2.24 | 1.34 |
| 78 | | 1.30 | 2.47 | 1.94 |
| 79 | | 1.21 | 1.87 | 1.43 |
| 80 | | 1.29 | 2.09 | 1.23 |
| 81 | | 1.33 | 2.08 | 1.79 |
| 82 | | 1.40 | 1.69 | 2.26 |
| 83 | | 1.16 | 2.51 | 2.07 |
| 84 | | 1.14 | 2.35 | 2.12 |
| 85 | | 1.54 | 2.33 | 1.37 |
| 86 | | 1.63 | 1.74 | 1.64 |
| 87 | | 1.93 | 2.03 | 1.74 |
| 88 | | 1.57 | 1.87 | 1.17 |
| 89 | | 1.61 | 2.16 | 2.11 |
| 90 | | 1.59 | 2.41 | 1.69 |
| 91 | | 1.55 | 2.62 | 1.22 |
| 92 | | 1.46 | 3.02 | 1.99 |
| 93 | | 1.21 | 1.58 | 1.07 |
| 94 | | 2.21 | 1.88 | 1.60 |
| 95 | | 2.16 | 2.25 | 1.75 |
| 96 | | 1.55 | 2.48 | 1.19 |
| 97 | | 1.98 | 2.72 | 1.54 |
| 98 | | 1.59 | 1.87 | 1.53 |
| 99 | | 2.11 | 2.10 | 1.34 |
| 100 | | 2.12 | 1.42 | 2.12 |
| **min** | | **0.82** | **1.35** | **0.86** |
| **max** | | **2.21** | **3.31** | **3.19** |
| **mean** | | **1.40** | **2.31** | **1.59** |
| **range** | | **1.39** | **1.96** | **2.34** |

It will be appreciated from these results that the collapsible tubes according to the present invention showed improved roundness as compared to the prior art control tubes.

It will be appreciated from the foregoing that the present invention may be realised using many different forms of blown film multi-layer polymeric material. Different types and grades of plastics may be utilised in the construction of the blown film, and the thickness of each layer may be varied, as appropriate. The layers may take the form of a substantially symmetrical construction, with an optional barrier layer at the centre. Alternatively, the layers may be arranged asymmetrically, with an optional barrier layer provided at or towards an outer or inner layer of the construction. This gives the option for the blown film to be used either way round, giving flexibility in the production of collapsible tube containers.

Preferably, the blown film will comprise at least one layer which functions as a barrier layer. It is also preferred that the blown film comprise not more than twenty layers. It is particularly preferred that the blown film comprise nine layers.

Preferably the barrier layer is an EVOH or amorphous polyamide (APA) thermoplastics material. The barrier layer may be Barex.

Alternatively or additionally, a platelet filler may be employed. The platelet filler can be any of a variety of lamellar fillers, preferably one in which the platelets delaminate under shear when the filler is blended with a thermoplastics resin before processing, and more particularly when the mixture of filler and thermoplastics resin is subjected to co-extrusion. Suitable lamellar fillers include clays, mica, graphite, montmorillonite and talc. Talc is a particularly preferred lamellar filler by virtue of its ease of delamination during shear.

Particularly preferred grades of talc for use in the present invention are sold by Richard Baker Harrison Group, England under the Trade Mark MAGSIL, and an especially preferred grade is "Magsil Osmanthus" which delaminates in processing to form platelets having an average aspect ratio of from 16 to 30 and a minimum aspect ratio of 5.

The high shear to which the filler particles are subjected in accordance with the present invention can be applied by various methods. It is particularly preferred to apply high shear during compounding prior to co-extrusion of the hot melts so that delamination of the filler particles is effected before co-extrusion. Further delamination can also be effected during the forming step. It is generally preferred, however, to effect most of the delamination during the compounding operation, the preferred compounding operation being the use of a twin screw extruder or a Banbury mixer.

In addition to delamination of the filler particles, it is generally preferred to effect co-extrusion of the filled resin under conditions which cause the filler particles to become oriented such that their larger face is substantially aligned with the surface of the mouldings. This is particularly effectively achieved in hot melt co-extrusion and has also led to a particularly effective delamination of the filler particles, thereby leading to an especially good barrier to flavour molecules.

Although the present invention is of particular utility in the production of toothpaste tubes, it will be appreciated by those skilled in the art that the end use of the tubes can be for any purpose.

The blown film multi-layer polymeric material requires no subsequent lamination step before it is formed into a tube incorporating a side-seam weld or join.

Although several embodiments of collapsible tube container have been described above, any one or more or all of the features described (and/or claimed in the appended claims) may be provided in isolation or in various combinations in any of the embodiments. As such, any one or more these features may be removed, substituted and/or added to any of the feature combinations described and/or claimed. For the avoidance of doubt, any of the features of any embodiment may be combined with any other feature from any of the embodiments.

Whilst preferred embodiments of the present invention have been described above and illustrated in the drawings, these are by way of example only and non-limiting. It will be appreciated by those skilled in the art that many alternatives are possible within the ambit of the invention, as set out in the appended claims.

The following clauses describe further aspects:
1. A collapsible tube container comprising a side-wall formed from a multi-layer polymeric material produced as a blown film, the side-wall comprising a longitudinal weld or join, and wherein the multi-layer polymeric material comprises a thickness of between 150 and 350 microns, more preferably of between 200 and 300 microns.
2. A collapsible tube container as set forth in clause 1 wherein the multi-layer polymeric material comprises at least one barrier layer.
3. A collapsible tube container as set forth in any one of the preceding clauses wherein the multi-layer polymeric material comprises up to twenty layers.
4. A collapsible tube container as set forth in any one of the preceding clauses wherein the multi-layer polymeric material comprises up to ten layers.
5. A collapsible tube container as set forth in any one of the preceding clauses wherein the multi-layer polymeric material comprises eight layers.
6. A collapsible tube container as set forth in any one of clauses 1 to 4 wherein the multi-layer polymeric material comprises nine layers.
7. A collapsible tube container as set forth in any one of the preceding clauses wherein the multi-layer polymeric material comprises a layer of LMDPE, a layer of HDPE, a tie layer, a barrier layer, a further tie layer, a further layer of HDPE and a further layer of LMDPE.
8. A collapsible tube container as set forth in any one of clauses 2 to 6 wherein the multi-layer polymeric material comprises a layer of MDPE, a layer of HOPE, a further layer of HDPE, a layer of LDPE, a tie layer, a barrier layer, a further tie layer, a further layer of HDPE and a further layer of MDPE.
9. A collapsible tube container as set forth in any one of the preceding clauses wherein the multi-layer polymeric material comprises a thickness of substantially 250 microns.
10. A collapsible tube container as set forth in clause 8 or clause 9 wherein the multi-layer polymeric material comprises a layer of MDPE of substantially 30 microns, a layer of HOPE of substantially 20 microns, a further layer of HDPE of substantially 55 microns, a layer of LDPE of substantially 20 microns, a tie layer of substantially 12.5 microns, a barrier layer of substantially 15 microns, a further tie layer of substantially 12.5 microns, a further layer of HDPE of substantially 25 microns and a further layer of MDPE of substantially 60 microns.
11. A collapsible tube container as set forth in clause 9 wherein the multi-layer polymeric material comprises a layer of LLDPE of substantially 30 microns, a layer of HDPE of substantially 20 microns, a further layer of HDPE of substantially 55 microns, a layer of LDPE of substantially 20 microns, a tie layer of substantially 12.5 microns, a barrier layer of substantially 15 microns, a further tie layer of substantially 12.5 microns, a further layer of HDPE of substantially 25 microns and a further layer of LLDPE of substantially 60 microns.
12. A collapsible tube container as set forth in any one of clauses 2 to 11 wherein the at least one barrier layer comprises ethylene vinyl alcohol (EVOH).
13. A collapsible tube container as set forth in any one of clauses 2 to 11 wherein the at least one barrier layer comprises amorphous polyamide (APA).
14. Use of a multi-layer polymeric material produced as a blown film to manufacture a collapsible tube container comprising a side-seam weld or join, wherein the multi-layer polymeric material comprises a thickness of between 150 and 350 microns, more preferably of between 200 and 300 microns.
15. A method of forming a collapsible tube container comprising a side-seam weld or join, the method comprising the steps of:
   taking at least one strip of a blown film multi-layer polymeric material having a thickness of between 150 and 350 microns, more preferably of between 200 and 300 microns;
   forming the at least one strip into an elongated container shape with overlapping or abutting edges; and
   welding or joining the edges together.
16. A method as set forth in clause 15 wherein the cross-section of at least part of the elongated container shape is substantially round or oval.
17. A method as set forth in clause 15 wherein the cross-section of at least part the elongated container shape is substantially polyhedral.
18. A method as set forth in clause 15 or clause 17 wherein the cross-section of at least part of the elongated container shape is substantially square with edges formed by creasing.
19. A method as set forth in any one of clauses 15 to 18 wherein the blown film multi-layer polymeric material comprises at least one barrier layer.
20. A collapsible tube container incorporating a side-seam weld or join and formed at least partially from a multi-layer polymeric material produced as a blown film having a thickness of between 150 and 350 microns, more preferably of between 200 and 300 microns, the multi-layer polymeric material further comprising at least one barrier layer.
21. Use of a collapsible tube container as set forth in any one of clauses 1 to 13 or clause 20 for packaging personal care products.
22. Use of a collapsible tube container as set forth in any one of clauses 1 to 13 or clause 20 for packaging foodstuffs.
23. Use of a collapsible tube container as set forth in any one of clauses 1 to 13 or clause 20 for packaging toothpaste or toothpaste type products.
24. A collapsible tube container comprising a side-wall formed from a multi-layer polymeric material produced as a blown film comprising a thickness of between 150 and 350 microns, more preferably of between 200 and 300 microns, the side-wall comprising a longitudinal weld or join, and each layer of the multi-layer polymeric material having a substantially similar or balanced molecular orientation profile.
25. A method of forming a collapsible tube container comprising a side-seam weld or join, the method comprising the steps of:
   taking at least one strip of a blown film multi-layer polymeric material having a thickness of between 150 and 350 microns, more preferably of between 200 and 300 microns, each layer of the multi-layer polymeric material having a substantially similar or balanced molecular orientation profile;
   forming the at least one strip into an elongated container shape with overlapping or abutting edges; and
   welding or joining the edges together.
26. A collapsible tube container comprising a side-wall formed from a multi-layer polymeric material produced as a blown film comprising a thickness of between 150 and 350 microns, more preferably of between 200 and 300 microns, the side-wall comprising a longitudinal weld or join, and each layer of the multi-layer polymeric material having a substantially similar or balanced stress profile.
27. A method of forming a collapsible tube container comprising a side-seam weld or join, the method comprising the steps of:
   taking at least one strip of a blown film multi-layer polymeric material having a thickness of between 150 and 350 microns, more preferably of between 200 and 300 microns, each layer of the multi-layer polymeric material having a substantially similar or balanced stress profile;
   forming the at least one strip into an elongated container shape with overlapping or abutting edges; and
   welding or joining the edges together.
28. A collapsible tube container as set forth in clause 24 or clause 26 further comprising any one or more of the features of any one or more of clauses 2 to 13.
29. A collapsible tube container as set forth in any one of clauses 1 to 13, 20, 24, 26 or 28 wherein the multi-layer polymeric material is produced as a blown film with no subsequent lamination step.
30. A collapsible tube container as set forth in any one of clauses 2 to 13 wherein the at least one barrier layer comprises a thermoplastics resin or material filled with platelet filler.
31. A collapsible tube container as set forth in clause 30 wherein the platelet filler comprises any one or more of clays, mica, graphite, montmorillonite or talc.

## Claims

1. A collapsible tube container comprising a side-wall formed from a multi-layer polymeric material produced as a blown film with no subsequent lamination step, the side-wall comprising a longitudinal weld or join, and wherein the multi-layer polymeric material comprises a thickness of between 150 and 350 microns, more preferably of between 200 and 300 microns.

2. A collapsible tube container as claimed in claim 1 wherein the multi-layer polymeric material comprises at least one barrier layer.

3. A collapsible tube container as claimed in claim 1 or claim 2 wherein the multi-layer polymeric material comprises a layer of LMDPE, a layer of HDPE, a tie layer, a barrier layer, a further tie layer, a further layer of HDPE and a further layer of LMDPE.

4. A collapsible tube container as claimed in claim 1 or claim 2 wherein the multi-layer polymeric material comprises a layer of MDPE, a layer of HDPE, a further layer of HDPE, a layer of LDPE, a tie layer, a barrier layer, a further tie layer, a further layer of HDPE and a further layer of MDPE.

5. A collapsible tube container as claimed in any one of claims 2 to 4 wherein the at least one barrier layer comprises ethylene vinyl alcohol (EVOH).

6. Use of a multi-layer polymeric material produced as a blown film with no subsequent lamination step to manufacture a collapsible tube container comprising a side-seam weld or join, wherein the multi-layer polymeric material comprises a thickness of between 150 and 350 microns, more preferably of between 200 and 300 microns.

7. A method of forming a collapsible tube container comprising a side-seam weld or join, the method comprising the steps of:
taking at least one strip of a multi-layer polymeric material produced as a blown film with no subsequent lamination step and having a thickness of between 150 and 350 microns, more preferably of between 200 and 300 microns;
forming the at least one strip into an elongated container shape with overlapping or abutting edges; and
welding or joining the edges together.

8. A method as claimed in claim 7 wherein the blown film multi-layer polymeric material comprises at least one barrier layer.

9. Use of a collapsible tube container as claimed in any one of claims 1 to 5 for packaging personal care products or foodstuffs or toothpaste or toothpaste type products.

10. A collapsible tube container comprising a side-wall formed from a multi-layer polymeric material produced as a blown film with no subsequent lamination step and comprising a thickness of between 150 and 350 microns, more preferably of between 200 and 300 microns, the side-wall comprising a longitudinal weld or join, and each layer of the multi-layer polymeric material having a substantially similar or balanced molecular orientation profile.

11. A method of forming a collapsible tube container comprising a side-seam weld or join, the method comprising the steps of:
taking at least one strip of a multi-layer polymeric material produced as a blown film with no subsequent lamination step and having a thickness of between 150 and 350 microns, more preferably of between 200 and 300 microns, each layer of the multi-layer polymeric material having a substantially similar or balanced molecular orientation profile;
forming the at least one strip into an elongated container shape with overlapping or abutting edges; and
welding or joining the edges together.

12. A collapsible tube container comprising a side-wall formed from a multi-layer polymeric material produced as a blown film with no subsequent lamination step and comprising a thickness of between 150 and 350 microns, more preferably of between 200 and 300 microns, the side-wall comprising a longitudinal weld or join, and each layer of the multi-layer polymeric material having a substantially similar or balanced stress profile.

13. A method of forming a collapsible tube container comprising a side-seam weld or join, the method comprising the steps of:
taking at least one strip of a multi-layer polymeric material produced as a blown film with no subsequent lamination step and having a thickness of between 150 and 350 microns, more preferably of between 200 and 300 microns, each layer of the multi-layer polymeric material having a substantially similar or balanced stress profile;
forming the at least one strip into an elongated container shape with overlapping or abutting edges; and
welding or joining the edges together.

14. A collapsible tube container as claimed in claim 10 or claim 12 further comprising any one or more of the features of any one or more of claims 2 to 5.

## Patentansprüche

1. Zusammenklappbarer Rohrbehälter, der eine Seitenwand umfasst, die aus einem als Blasfolie gefertigten, mehrschichtigen Polymer-Material, ohne nachfolgenden Laminierungsschritt, gebildet ist, wobei die Seitenwand eine Längsschweißung oder Längsverbindung umfasst, und wobei das mehrschichtige Polymer-Material eine Dicke von zwischen 150 und 350 Mikrometern, vorzugsweise von zwischen 200 und 300 Mikrometern, umfasst.

2. Zusammenklappbarer Rohrbehälter gemäß Anspruch 1, bei welchem das mehrschichtige Polymer-Material wenigstens eine Barriereschicht umfasst.

3. Zusammenklappbarer Rohrbehälter gemäß Anspruch 1 oder Anspruch 2, bei welchem das mehrschichtige Polymer-Material eine LMDPE-Schicht, eine HDPE-Schicht, eine Verbindungsschicht, eine Barriereschicht, eine weitere Verbindungsschicht, eine weitere HDPE-Schicht sowie eine weitere LMDPE-Schicht umfasst.

4. Zusammenklappbarer Rohrbehälter gemäß Anspruch 1 oder Anspruch 2, bei welchem das mehrschichtige Polymer-Material eine MDPE-Schicht, eine HDPE-Schicht, eine weitere HDPE-Schicht, eine LDPE-Schicht, eine Verbindungsschicht, eine Barriereschicht, eine weitere Verbindungsschicht, eine weitere HDPE-Schicht sowie eine weitere MDPE-Schicht umfasst.

5. Zusammenklappbarer Rohrbehälter gemäß einem der Ansprüche 2 bis 4, bei welchem die wenigstens eine Barriereschicht Ethylenvinylalkohol (EVOH) umfasst.

6. Verwendung eines als Blasfolie, ohne nachfolgenden Laminierungsschritt, gefertigten, mehrschichtigen Polymer-Materials zum Herstellen eines zusammenklappbaren Rohrbehälters, der eine Seitennahtschweißung oder Seitennahtverbindung umfasst, wobei das mehrschichtige Polymer-Material eine Dicke von zwischen 150 und 350 Mikrometern, vorzugsweise von zwischen 200 und 300 Mikrometern, umfasst.

7. Verfahren zum Bilden eines zusammenklappbaren Rohrbehälters, der eine Seitennahtschweißung oder Seitennahtverbindung umfasst, wobei das Verfahren die Schritte umfasst:
Verwenden wenigstens eines Streifens eines mehrschichtigen Polymer-Materials, welches als Blasfolie ohne nachfolgenden Laminierungsschritt gefertigt wird und eine Dicke von zwischen 150 und 350 Mikrometern, vorzugsweise von zwischen 200 und 300 Mikrometern, aufweist;
Formen des wenigstens einen Streifens in die Gestalt eines länglichen Behälters mit einander überlappenden oder gegen einander anliegenden Rändern; und
Verschweißen oder Verbinden der Ränder.

8. Verfahren gemäß Anspruch 7, in welchem das als Blasfolie gefertigte, mehrschichtige Polymer-Material wenigstens eine Barriereschicht umfasst.

9. Verwendung eines zusammenklappbaren Rohrbehälters gemäß einem der Ansprüche 1 bis 5 zum Verpacken von Körperpflegeprodukten oder Lebensmitteln oder Zahnpasta oder Zahnpasta-artigen Produkten.

10. Zusammenklappbarer Rohrbehälter, der eine Seitenwand umfasst, die aus einem als Blasfolie gefertigten, mehrschichtigen Polymer-Material, ohne nachfolgenden Laminierungsschritt, gebildet ist, welches eine Dicke von zwischen 150 und 350 Mikrometern, vorzugsweise von zwischen 200 und 300 Mikrometern, umfasst, wobei die Seitenwand eine Längsschweißung oder Längsverbindung umfasst und jede Schicht des mehrschichtigen Polymer-Materials ein im Wesentlichen ähnliches oder ausgeglichenes Molekülorientierungsprofil aufweist.

11. Verfahren zum Formen eines zusammenklappbaren Rohrbehälters, der eine Seitennahtschweißung oder Seitennahtverbindung umfasst, wobei das Verfahren die Schritte umfasst:
Verwenden wenigstens eines Streifens eines mehrschichtigen Polymer-Materials, welches als Blasfolie ohne nachfolgenden Laminierungsschritt gefertigt wird und welches eine Dicke von zwischen 150 und 350 Mikrometern, vorzugsweise von zwischen 200 und 300 Mikrometern, aufweist, wobei jede Schicht des mehrschichtigen Polymer-Materials ein im Wesentlichen ähnliches oder ausgeglichenes Molekülorientierungsprofil aufweist;
Formen des wenigstens einen Streifens in die Gestalt eines länglichen Behälters mit einander überlappenden oder gegen einander anliegenden Rändern; und
Verschweißen oder Verbinden der Ränder.

12. Zusammenklappbarer Rohrbehälter, der eine Seitenwand umfasst, die aus einem als Blasfolie gefertigten, mehrschichtigen Polymer-Material, ohne nachfolgenden Laminierungsschritt, gebildet ist und welches eine Dicke von zwischen 150 und 350 Mikrometern, vorzugsweise von zwischen 200 und 300 Mikrometern, umfasst, wobei die Seitenwand eine Längsschweißung oder Längsverbindung umfasst und jede Schicht des mehrschichtigen Polymer-Materials ein im Wesentlichen ähnliches oder ausgeglichenes Belastungsprofil aufweist.

13. Verfahren zum Formen eines zusammenklappbaren Rohrbehälters, der eine Seitennahtschweißung oder Seitennahtverbindung umfasst, wobei das Verfahren die Schritte umfasst:
Verwenden wenigstens eines Streifens eines mehrschichtigen Polymer-Materials, welches als Blasfolie ohne nachfolgenden Laminierungsschritt gefertigt wird und welches eine Dicke von zwischen 150 und 350 Mikrometern, vorzugsweise von zwischen 200 und 300 Mikrometern, aufweist, wobei jede Schicht des mehrschichtigen Polymer-Materials ein im Wesentlichen ähnliches oder ausgeglichenes Belastungsprofil aufweist;
Formen des wenigstens einen Streifens in die Gestalt eines länglichen Behälters mit einander überlappenden oder gegen einander anliegenden Rändern; und
Verschweißen oder Verbinden der Ränder.

14. Zusammenklappbarer Rohrbehälter gemäß Anspruch 10 oder Anspruch 12, der ferner ein oder mehrere Merkmale eines oder mehrerer der Ansprüche 2 bis 5 umfasst.

## Revendications

1. Conteneur tubulaire pliable comprenant une paroi latérale réalisée en un matériau polymère multicouche produit comme une pellicule soufflée sans étape de stratification ultérieure, la paroi latérale comportant une soudure ou jointure longitudinale, et dans lequel le matériau polymère multicouche a une épaisseur comprise entre 150 et 350 microns, comprise, plus préférablement, entre 200 et 300 microns.

2. Conteneur tubulaire pliable tel que revendiqué dans la revendication 1, dans lequel le matériau polymère multicouche comprend au moins une couche barrière.

3. Conteneur tubulaire pliable tel que revendiqué dans la revendication 1 ou la revendication 2, dans lequel le matériau polymère multicouche comprend une couche de LMDPE, une couche de HDPE, une couche de liaison, une couche barrière, une autre couche de liaison, une autre couche de HDPE et une autre couche de LMDPE.

4. Conteneur tubulaire pliable tel que revendiqué dans la revendication 1 ou la revendication 2, dans lequel le matériau polymère multicouche comprend une couche de MDPE, une couche de HDPE, une autre couche de HDPE, une couche de LDPE, une couche de liaison, une couche barrière, une autre couche de liaison, une autre couche de HDPE et une autre couche de MDPE.

5. Conteneur tubulaire pliable selon l'une quelconque des revendications 2 à 4 dans lequel l'au moins une couche barrière comprend de l'éthylène-alcool vinylique (EVOH).

6. Utilisation d'un matériau polymère multicouche produit comme une pellicule soufflée sans étape de stratification ultérieure pour fabriquer un conteneur tubulaire pliable comportant une jointure ou une soudure par coutures latérales, dans laquelle le matériau polymère multicouche a une épaisseur comprise entre 150 et 350 microns, comprise, plus préférablement entre 200 et 300 microns.

7. Procédé de formation d'un conteneur tubulaire pliable comprenant une jointure ou une soudure par coutures latérales, le procédé comprenant les étapes qui consistent :
à prendre au moins une bande d'un matériau polymère multicouche produit comme une pellicule soufflée sans étape de stratification ultérieure et ayant une épaisseur comprise entre 160 et 350 microns, comprise plus préférablement entre 200 et 300 microns ;
à former l'au moins une bande sous forme d'un conteneur allongé avec des bords qui se chevauchent ou qui viennent en about ; et
à souder ou joindre les bords.

8. Procédé tel que revendiqué dans la revendication 7, dans lequel le matériau polymère multicouche en pellicule soufflée comprend au moins une couche barrière.

9. Utilisation d'un conteneur tubulaire pliable selon l'une quelconque des revendications 1 à 5 pour emballer des produits de soins personnels ou des denrées alimentaires ou des pâtes dentifrices ou des produits du type pâtes dentifrices.

10. Conteneur tubulaire pliable comprenant une paroi latérale réalisée en un matériau polymère multicouche produit comme une pellicule soufflée sans étape de stratification ultérieure et ayant une épaisseur comprise entre 150 et 350 microns, comprise plus préférablement entre 200 et 300 microns, la paroi latérale comprenant une jointure ou une soudure longitudinale, et chaque couche du matériau polymère multicouche ayant un profil d'orientation moléculaire essentiellement similaire ou symétrique.

11. Procédé de formation d'un conteneur tubulaire pliable comprenant une jointure ou une soudure par coutures latérales, le procédé comprenant les étapes qui consistent :
à prendre au moins une bande d'un matériau polymère multicouche en pellicule soufflée produit comme une pellicule soufflée sans étape de stratification ultérieure et ayant une épaisseur comprise entre 150 et 350 microns, comprise plus préférablement entre 200 et 300 microns, chaque couche du matériau polymère multicouche ayant un profil d'orientation moléculaire essentiellement similaire ou symétrique ;
à former l'au moins une bande sous forme d'un conteneur allongé avec des bords qui se chevauchent ou qui viennent en about ; et
à souder ou joindre les bords.

12. Conteneur tubulaire pliable comprenant une paroi latérale réalisée en un matériau polymère multicouche produit comme une pellicule soufflée produit comme une pellicule soufflée sans étape de stratification ultérieure et ayant une épaisseur comprise entre 150 et 350 microns, comprise plus préférablement entre 200 et 300 microns, la paroi latérale comprenant une jointure ou une soudure longitudinale, et chaque couche du matériau polymère multicouche ayant un profil de contrainte essentiellement similaire ou symétrique.

13. Procédé de formation d'un conteneur tubulaire pliable comprenant une jointure ou une soudure par coutures latérales, le procédé comprenant les étapes qui consistent :
à prendre au moins une bande d'un matériau polymère multicouche produit comme une pellicule soufflée sans étape de stratification ultérieure et ayant une épaisseur comprise entre 160 et 350 microns, comprise plus préférablement entre 200 et 300 microns, chaque couche du matériau polymère multicouche ayant un profil de contrainte essentiellement similaire ou symétrique ;
à former l'au moins une bande sous forme d'un conteneur allongé avec des bords qui se chevauchent ou qui viennent en about ; et
à souder ou joindre les bords.

14. Conteneur tubulaire pliable tel que revendiqué dans la revendication 10 ou la revendication 12 comprenant en outre une ou plusieurs des caractéristiques de l'une quelconque ou de plusieurs des revendications 2 à 5.
